# EUROPÄISCHE PATENTANMELDUNG

(11) **EP 0 974 561 A1**
(43) Veröffentlichungstag der Anmeldung: **26.01.2000**
(21) Anmeldenummer: 99114191.2
(22) Anmeldetag: 23.07.1999
(51) Int. Cl.: C04B 7/36, F27B 7/42

(54) **Verfahren und Vorrichtung zur Verwertung von Abfällen**

(30) Priorität: 24.07.1998 DE 19833447
(71) Anmelder: Hinkel, Wolfgang, 55232 Alzey (DE)
(72) Erfinder: Eichler, Wolf R., 70619 Stuttgart (DE); Hinkel, Wolfgang, 55232 Alzey (DE)
(74) Vertreter: HOFFMANN - EITLE

(57) **Zusammenfassung**

Das Verfahren zur Verwertung von mineralischen Abfällen zur Herstellung eines Zielstoffes mit vorgegebener mineralischer Zusammensetzung umfaßt die Schritte des Vorgebens der mineralischen Zusammensetzung eines Zielstoffes, die Analyse einer Vielzahl von Abfallfraktionen, die Ermittlung der einzusetzenden Abfallfraktionen und des Mischungsverhältnisses derselben sowie das Mischen der Abfallfraktionen entsprechend dem ermittelten Mischungsverhältnis. Die zur Verwendung gelangende Vorrichtung umfaßt eine Berechnungseinheit zur Ermittlung der Mischungsmengen und Mischungsverhältnisse, eine Dosiereinrichtung für die mineralischen Abfallfraktionen sowie eine Mischeinrichtung zum Erzeugen einer Abfallmischung.

## Beschreibung

### Gebiet der Erfindung

Die Erfindung betrifft ein Verfahren sowie eine Vorrichtung zur Verwertung von Abfällen zur Herstellung eines Zielstoffes mit vorgegebener mineralischer Zusammensetzung.

### Stand der Technik

Die Verwertung von Abfallstoffen stellt ein vorrangiges Ziel im Hinblick auf die Verringerung von Abfallmengen wie auch von deren Gefährdungspotential dar.

Die Verwertung von mineralischen Abfällen mit geringen organischen Anteilen von etwa bis zu 10 Gew. % - 15 Gew. % ohne aufwendige Aufbereitung stellt eine besondere Herausforderung dar. Eine thermische Vorbehandlung ist mit einem sehr hohen Energieeinsatz verbunden, so daß diese Art der Vorbehandlung technisch nicht sinnvoll ist. Andererseits müssen organische Anteile grundsätzlich vollständig mineralisiert werden, um nachteilige Produktveränderungen zu vermeiden.

Die anorganischen/mineralischen Rückstände aus dem produzierenden Gewerbe werden formal den folgenden Abfallhauptgruppen zugeordnet:
- Bauschutt, Bodenaushub, Straßenaufbruch,
- Asche, Schlacke, Ruß aus der Verbrennung,
- Ofenausbruch, Hütten- und Gießereischutt,
- Form-, Kernsand, Stäube etc.
- metallurgische Schlacken und Krätzen,
- Metallabfälle,
- Oxide, Hydroxide, Salze und sonstige feste Produktionsrückstände.

Entsprechend offiziellen Statistiken werden davon etwa 30 Gew. % einer Verwertung zugeführt. Etwa die Hälfte entfällt dabei auf Rückstände mit hoher Wertschöpfung, insbesondere Metallabfälle, die nahezu vollständig recycled werden.

Bei der Verwertung von industriellen Nebenprodukten oder Produktionsrückständen steht stets die Umweltverträglichkeit im Vordergrund. Dies gilt insbesondere für solche Stoffe, die eine relativ heterogene Zusammensetzung aufweisen. Beim Einsatz mineralischer Produkte aus aufbereiteten Abfällen können durch Auslaugung der Materialien Gefährdungen von Boden und Wasser hervorgerufen werden. Andererseits besteht bei einigen Rückständen die Möglichkeit, daß bei einer Weiterverarbeitung Stoffe ausgasen und hierdurch akute Probleme auftreten können.

Unterschiedlichste Ansätze zur Substitution von Roh- und Hilfsstoffen wurden verfolgt. Bei diesen Versuchen und den entsprechenden Produktionsverfahren wurde vorwiegend die Verwertungsmöglichkeit spezifisch kontaminierter Abfallfraktionen, insbesondere die Verwertung bedeutsamer anorganischer Rückstände aus industriellen Produktionsprozessen, oder der Einsatz vorwiegend organischer Fraktionen oder von Monofraktionen aus einem einzelnen Industriezweig oder Einzelbetrieb genutzt. In dem Fachaufsatz "Verwertung von Reststoffen aus der Brauereiindustrie bei der Ziegelherstellung", Entsorgungspraxis 1997, Seiten 24 bis 31, wird die Verwendung einer derartigen Monofraktion aus einem Einzelbetrieb beschrieben. Ähnliche Anstrengungen wurden bereits unternommen, um Gießereialtsande einer Verwertung zuzuführen.

Ein wichtiger Anwendungsbereich für die Verwertung von Abfällen ist die Zementindustrie. Hier bietet sich die Verwendung mineralischer Rückstände an, weil große Mengen an mineralischen Rohstoffen verbraucht werden und folglich ein umfangreiches Substitutionspotential besteht. Eine Abfallverwertung für die Herstellung eines Rohmehlersatzstoffes der Zementherstellung für die Portlandzementklinkerherstellung findet bislang nicht statt. Allenfalls werden mineralische Abfälle, vorwiegend Sandfangrückstände, unter Beigabe von gebranntem Kalk dem Rohmehl der Portlandzementklinkerproduktion zugegeben. Hierbei wird auf den CaO-Gehalt des zugegebenen Stoffes primär geachtet. Eine Berücksichtigung der übrigen chemischen Komponenten wie SiO₂, Al₂O₃, Fe₂O₃, MgO, SO₃ und Alkalien erfolgte bisher nicht. Allenfalls wird darauf geachtet, den Eintrag von Schwermetallen so gering wie möglich zu halten.

Im Sinne der Förderung einer Kreislaufwirtschaft ist es natürlich, Ressourcen vorrangig durch die umweltverträgliche Verwertung von Abfällen zu sichern. Gerade die Bauwirtschaft ist einerseits der größte Abfallproduzent (etwa 285 Mio Tonnen/pro Jahr in der Bundesrepublik Deutschland), andererseits ist dieser Wirtschaftszweig mit einem jährlichen Verbrauch an mineralischen Rohstoffen von rund 575 Mio t/a äußerst materialintensiv. Darüber hinaus ist für vorwiegend anorganische bzw. mineralische Abfälle im Gegensatz zu organischen Abfällen keine Mengen- und Volumenreduktion durch eine der Deponie vorgeschaltete thermische Behandlung möglich. Des weiteren dürfen solche Abfälle auch nicht unbehandelt abgelagert werden, wenn ihr organischer Anteil, gemessen als Glühverlust oder TOC-Anteil 5 Gew.-% bzw. 3 Gew.-% übersteigt. Aus diesen Gründen sind solche Stoffe einer Wiederverwendung zuzuführen oder in anderen Bereichen als Aggregate oder Sekundärrohstoffe zu verwerten, wie aus dem Kreislaufwirtschafts- und Abfallgesetz sowie der technischen Anleitung "Siedlungsabfall" hervorgeht.

Da für die Herstellung von Zement der Energieinhalt als Verursacher der Hauptkosten vorrangig betrachtet werden muß, wurde in der Vergangenheit angestrebt, den aufzuwendenden Energieinhalt für das Brennen von Rohmehl durch die thermische Verwertung von Abfällen zu vermindern. Rohmehl stellt eine Mischung aus Ton- und Kalkgestein dar, so daß organische Abfälle wie z.B. Reifen, Papier, DSD-Monofraktionen, Ölschlämme und ähnliches hierfür geeignete Stoffe sind. Vor dem Hintergrund des Kreislaufwirtschafts- und Abfallgesetzes besteht nun ein Bedürfnis, auch mineralische Abfallfraktionen mit nur geringem organischen Anteil einer sinnvollen Verwertung zuzuführen. Wie oben ausgeführt wurde, darf hierbei die thermische Verwertung nicht im Vordergrund stehen, sondern ausschließlich die Verfügbarkeit der anorganischen Komponenten wie CaO, SiO₂, Al₂O₃, Fe₂O₃, MgO, SO₃ und Alkalien. Darüber hinaus muß auch betriebswirtschaftlichen Überlegungen Rechnung getragen werden, d.h. im Hinblick auf eine Minimierung der Transportkosten nach Möglichkeiten gesucht werden, sinnvolle Verwertungs- und Entsorgungsfunktionen in einem eng begrenzten regionalen Umfeld zu verwirklichen.

### Gegenstand der Erfindung

Der Erfindung liegt die Aufgabe zugrunde, ein Verfahren sowie eine Vorrichtung zur Verwertung von Abfällen zur Herstellung eines Zielstoffes vorzuschlagen, die bei regional unterschiedlichen Abfallfraktionen und Abfallmengen eine möglichst hohe Recyclingquote gestatten.

Diese Aufgabe wird durch ein Verfahren mit den Merkmalen des Anspruchs 1 gelöst. Die zur Verwendung gelangende Vorrichtung ist durch die Merkmale des Anspruchs 10 gekennzeichnet.

Der Erfindung liegt der Gedanke zugrunde, im Gegensatz zu bekannten Verfahren Mischungen von Abfällen einzusetzen. Indem eine Vielzahl unterschiedlicher mineralischer Abfallfraktionen, die in der Regel von unterschiedlichen Abfallerzeugern stammen, eingesetzt werden, kann aus der jeweiligen Analyse der mineralischen Zusammensetzung der einzelnen Abfallfraktionen sowie aus der Kenntnis des herzustellenden Zielstoffes und vorhandener Rohstoffe zum Zumischen ein, unter Berücksichtigung der vorhandenen Abfallfraktionen sowie des zu erzeugenden Zielstoffes, optimales Mischungsverhältnis errechnet werden, auf das gestützt der Zielstoff hergestellt werden kann. Unter mineralischen Abfällen werden anorganische Abfälle mit einem organischen Anteil von etwa bis zu 15 Gew. % verstanden.

Bevorzugte Ausführungsformen sind durch die übrigen Ansprüche gekennzeichnet.

So ist nach einer bevorzugten Ausführungsform der Zielstoff Rohmehlersatzstoff für die Zementherstellung. Dieser Rohmehlersatzstoff, der im folgenden auch als Rohmix bezeichnet wird, findet bei der Portlandzementklinkerherstellung Anwendung, wobei bei der Herstellung eine Kombination aus konventionellem Rohstoff unter Zugabe des Rohlmehlersatzstoffes eingesetzt werden kann. Die chemische Zusammensetzung von Rohmix ist variabel, wird jedoch in der Regel der Zusammensetzung des zementwerkeigenen Rohmehls entsprechen, soweit nicht mit der Zugabe von Rohmehl Korrekturmaßnahmen verbunden sind. Diese möglichen Korrekturmaßnahmen stellen einen wesentlichen Gesichtspunkt dar, da gleichzeitig mit dem erfindungsgemäßen Verfahren Schadstoffkomponenten wie Blei, Quecksilber, Arsen, Cadmium, Beryllium, Chrom, Kupfer, Zink usw. gezielt in einem vorgegebenen Grenzwertbereich eingestellt werden können, so daß der erzeugte Rohmehlersatzstoff zur Verbesserung des im Zementwerk eingesetzten, werkseigenen Rohmehls eingesetzt werden kann.

Je nach den gewünschten Eigenschaften des Zielstoffes kann es bevorzugt sein, zu den Abfallfraktionen ein oder mehrere Rohstoffe zuzumischen. Dies kann entweder geboten sein, weil sich mit den vorliegenden Abfallfraktionen die exakte gewünschte mineralische Zusammensetzung des Zielstoffes nicht erreichen läßt. Die Zugabe eines oder mehrerer Rohstoffe kann aber auch dazu dienen, einen Zielstoff mit möglichst geringen Verunreinigungen zu erzeugen.

Nach einer bevorzugten Ausführungsform erfolgt die Ermittlung der Abfallfraktionen, des Mischungsverhältnisses und die Ermittlung eventuell zuzugebender Rohstoffe und deren Dosierung rechnergestützt. Da Abfälle viele verschiedene mineralische Bestandteile besitzen und zudem eine Vielzahl von Abfallfraktionen als Ausgangsstoffe zur Verfügung stehen, können sich die Berechnungen als sehr aufwendig darstellen, so daß der Einsatz von Rechnern große Vorteile bieten kann. Darüber hinaus läßt sich rechnergestützt auch die zur Verwendung gelangende Vorrichtung automatisieren, indem z.B. die Dosierung der verschiedenen Abfallfraktionen automatisch auf der Grundlage des Berechnungsergebnisses erfolgt und auch der mögliche Einsatz einer zwischengeschalteten Trocknerstufe in Abhängigkeit von dem Berechnungsergebnis erfolgt.

Nach einer bevorzugten Ausführungsform können bei der rechnergestützten Ermittlung Gewichtungsfaktoren für die einzelnen Abfallfraktionen eingegeben werden, um die Menge an zu verarbeitenden Abfällen zu berücksichtigen. Hierin liegt ein großer Vorteil, da die verschiedenen Abfallfraktionen in unterschiedlichen Mengen vorliegen können und man daher bei der Verwertung der Abfälle bestrebt ist, diese möglichst entsprechend den eingehenden Mengen weiterzuverarbeiten. Dies ist durch die Eingabe von Gewichtungsfaktoren möglich, wobei je nach Gewichtungsfaktor sich entweder die Auswahl der einzelnen Abfallfraktionen selbst verändert oder aber auch die Menge an möglicherweise zuzugebenden Rohstoffen erhöht, um eine oder mehrere bestimmte Abfallfraktionen bevorzugt zu verwerten.

Im Falle der Herstellung von Rohmix, d.h. Rohmehlsubstitut für das Rohmehl der Zementproduktion, kann durch Brennen des Rohmehlsubstituts bei der Herstellung der Aufgabepunkt im Zementwerk frei wählbar gestaltet werden. Hierdurch gewinnt das Rohmix eine erhöhte Bedeutung für die Zementindustrie, da sich der bereits auf etwa bis zu 1000°C vorgebrannte Rohmix im Zementwerk sehr variabel einsetzen läßt.

Vorzugsweise wird die Zusammensetzung des Rohmehlsubstituts geeignet eingestellt, um das Rohmehl des Zementwerks gezielt zu beeinflussen. Das in den Zementwerken eingesetzte Rohmehl ist durch das abgebaute Material gekennzeichnet, so daß sich in der Zementindustrie nicht immer die gewünschten Eigenschaften der Erzeugnisse aufgrund der Limitationen der Rohstoffe verwirklichen lassen. Die Zugabe des Rohmix kann diese Probleme lösen, indem ein weiterer Rohstoff eingesetzt wird, dessen Eigenschaften so einstellbar sind, daß die im Zementwerk erzeugte Mischung aus Rohmehl und Rohmehlsubstitut gemäß der Erfindung die Zielvorgaben des Zementwerks erreichen, oder diesen zumindest näher kommen, als es mit dem alleinigen Einsatz von Rohmehl möglich wäre. Eine konkrete Anwendungsform liegt darin, daß das Schadstoffpotential des zementwerkeigenen Rohmehls minimiert werden kann und beispielsweise Schadstoffkomponenten wie Blei, Quecksilber, Arsen, Cadmium, Beryllium, Chrom, Kupfer und Zink gezielt minimiert werden können.

Vorzugsweise kann der Feuchtigkeitsgehalt des Rohmehlsubstituts durch Trocknen den zementwerkeigenen Bedingungen angepaßt werden. Je besser das Rohmehlsubstitut an die Bedürfnisse des Zementwerks angepaßt ist, desto höher ist die Wertigkeit dieses Produktes und der damit erzielbare Preis.

Nach einer bevorzugten Ausführungsform der Vorrichtung umfaßt diese mindestens eine Zerkleinerungseinrichtung für Abfälle oder die Abfallmischung. Bei der Erzeugung eines geeigneten wieder verwertbaren Zielstoffes kommt es in der Regel darauf an, daß dieser eine möglichst homogene Zusammensetzung besitzt. Dies läßt sich aber nur erreichen, wenn die festen Abfallfraktionen ebenso wie die staubförmigen Abfälle oder pastösen Abfälle und Schlämme einer guten Vermischung zugänglich sind. Dies ist nur möglich, wenn speziell vorgegebene Partikelgrößen erzielt werden. Daher lassen sich die Einsatzmöglichkeiten und die Variabilität der gesamten Vorrichtung erhöhen, wenn geeignete Zerkleinerungsvorrichtungen, z.B. Kollergänge, vorhanden sind.

Vorzugsweise ist die Zerkleinerungseinrichtung ein Siebrundbeschicker. Ein Siebrundbeschicker besitzt den Vorteil, daß neben der Zerkleinerung bereits eine Homogenisierung der Abfälle durchgeführt wird.

Vorzugsweise ist die Mischeinrichtung ein Extruder. Ein Extruder ist sehr variabel und kann die unterschiedlichen Konsistenzen der zu vermischenden Abfallfraktionen jeweils verarbeiten. Darüber hinaus findet in einem Extruder eine sehr intensive Vermischung statt, so daß der erzeugte Zielstoff eine hohe Qualität besitzt.

Nach einer bevorzugten Ausführungsform kann die Vorrichtung weiterhin einen Trockner zur Entfeuchtung der Abfallmischung umfassen. Je nach der Dosierung der Abfallfraktion und deren Konsistenz kann die Abfallmischung deutlich unterschiedliche Feuchtegehalte aufweisen. Daher ist es vorteilhaft, eine Trocknungseinrichtung in die Vorrichtung zu integrieren, um auch Zielstoffe erzeugen zu können, die einen geringen Feuchtegehalt besitzen sollen, aber in optimaler Weise aus Abfallfraktionen gemischt werden, die jeweils einen hohen Wassergehalt besitzen.

Vorzugsweise umfaßt die Vorrichtung weiterhin einen Gegenstromdrehrohrofen. Hierdurch läßt sich weiter die Variabilität der Vorrichtung erhöhen, weil der Gegenstromdrehrohrofen nicht nur zum Trocknen der Abfallmischung, sondern auch für eine mögliche Vorbehandlung derselben geeignet ist. So kann beispielsweise bei der Herstellung von Rohmehlsubstitut bereits eine Vorbehandlung stattfinden, indem das Rohmehlsubstitut bis ca. 1000° C vorgeglüht wird.

Nach einer bevorzugten Ausführungsform umfaßt die Vorrichtung weiterhin Analyseeinrichtungen für die mineralischen Abfallfraktionen. Hierdurch läßt sich die mineralische Zusammensetzung der Abfallfraktionen exakt bestimmen und das gewünschte Ergebnis, d.h. der aus den Abfallfraktionen herzustellende Zielstoft, exakt der Zielvorgabe anpassen.

Vorzugsweise besitzt die Vorrichtung weiterhin Vorratsbehälter und Dosiereinrichtungen für Rohstoffe. Wie oben bereits ausgeführt wurde, kann es je nach gewünschtem Zielstoff erforderlich sein, einen oder mehrere Rohstoffe zuzugeben. Die Vorrichtung wird durch das Vorsehen von Vorratsbehältern und Dosiereinrichtungen für Rohstoffe weiter in ihrer Variabilität erhöht, weil sich hierdurch das Spektrum der sinnvoll verwertbaren Abfälle noch weiter erhöht.

### Kurze Beschreibung der Zeichnung

Nachfolgend wird die Erfindung rein beispielhaft beschrieben, wobei die erfindungsgemäße Vorrichtung anhand der Figur erläutert wird.

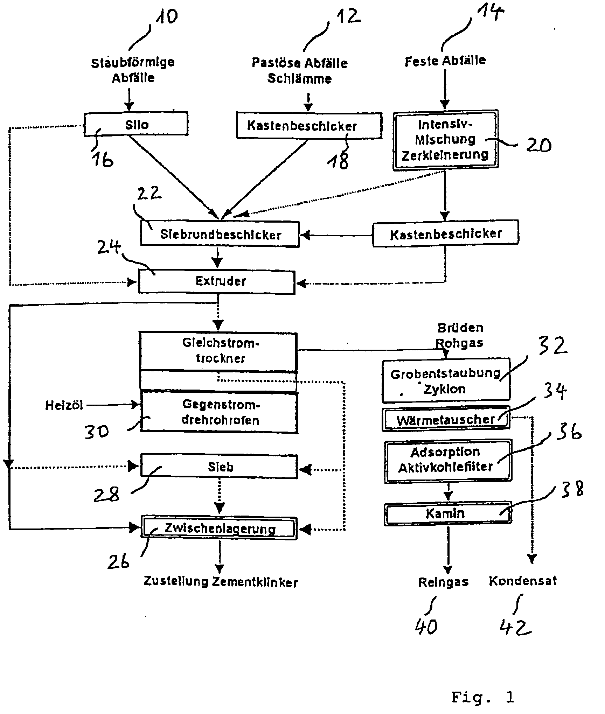

Fig. 1 zeigt in einer schematischen Fließbilddarstellung die in der Vorrichtung vorhandenen Anlagenkomponenten und den Materialfluß durch die Vorrichtung.

### Wege zur Ausführung der Erfindung

Fig. 1 zeigt schematisch die Herstellung eines Zielstoffes am Beispiel der Herstellung von Zementklinker.

In der Darstellung in Fig. 1 sind zur einfacheren Darstellung nur drei verschiedene Abfallfraktionen 10, 12 und 14 dargestellt, die beispielhaft ausgewählt wurden, um die Behandlung verschiedener Typen von Abfällen, wie staubförmige Abfälle 10, pastöse Abfälle und Schlämme 12 sowie feste Abfälle 14 zu erläutern.

Die staubförmigen Abfälle 10 werden in Silos 16 gelagert, aus denen sie unter Verwendung der bekannten Dosier- und Fördertechniken in genau abgestimmter Menge entnommen werden können. Für pastöse Abfälle und Schlämme 12 bietet sich die Verwendung eines Kastenbeschickers 18 an. Kastenbeschicker besitzen eine Fördereinrichtung, wie beispielsweise ein Laufband, am Boden eines kastenförmigen Vorratsbehälters und können zusätzlich eine Förderschnecke aufweisen, die sowohl der Vermischung der pastösen oder schlammförmigen Abfälle dient, aber auch eine Vorzerkleinerung durchführen kann. Feste Abfälle müssen vor der Weiterverarbeitung einer Zerkleinerung sowie intensiven Mischung 20 unterworfen werden. Hierfür kann ein Kollergang oder ähnliches zum Einsatz gelangen. Die Förderung der zerkleinerten und vermischten festen Abfälle kann entweder direkt über eine geeignete Fördereinrichtung oder aber unter Zwischenschaltung eines Kastenbeschickers erfolgen.

Die von den verschiedenen Abfallfraktionen benötigten Mengen werden entsprechend der berechneten Vorgabe durch eine manuelle Betätigung der Förder- und Dosiereinrichtungen oder aber auch automatisch einem Siebrundbeschicker 22 zugeführt. In der Technik bekannte Siebrundbeschicker besitzen eine geneigte Bodenlochplatte, durch die das Material durchgepreßt wird. Der Siebrundbeschicker dient somit dazu, die Partikelgröße der Abfallmischung zu homogenisieren, weil eine möglichst homogene Durchmischung der von den verschiedenen Abfallfraktionen herrührenden Einsatzstoffe für die Qualität des erzeugten Zielstoffes, z.B. Rohmehlersatz für die Zementklinkerproduktion, unerläßlich ist.

Nach dem Durchtreten durch die Bodenlochplatte des Siebrundbeschickers 22 wird die Rohstoffmischung extrudiert. Hierdurch wird eine weitere Homogenisierung der Stoffmischung, bei einem entsprechenden Feuchtegehalt der Einsatzmischung auch ein Durchkneten der Abfallmischung erzielt. Da die staubförmigen Abfälle ohnehin eine sehr geringe Partikelgröße aufweisen, können diese unter Umgehung des Siebrundbeschickers direkt dem Extruder 24 zugeführt werden. Gleiches gilt für die zerkleinerten festen Abfälle, die je nach der zum Einsatz gelangenden Zerkleinerungsvorrichtung bereits ebenfalls auf eine ausreichend geringe Partikelgröße gebracht werden können, so daß sie direkt dem Extruder zugegeben werden können. Da der Siebrundbeschicker jedoch nicht nur zur Zerkleinerung der Abfallmischung dient, sondern auch eine Homogenisierung der Abfallmischung herbeiführt, ist die Verwendung eines Siebrundbeschickers aber die bevorzugte Verfahrensvariante.

Im Extruder kann neben der intensiven Vermischung auch ein Entfeuchten stattfinden, indem an den Extruder Vakuum angelegt wird. Nach dem Extrudieren der Abfallmischung kann diese direkt einer Zwischenlagerung 26 zugeführt werden, der bereits die Auslieferung des gelagerten Rohstoffes oder Rohstoffersatzes zum Abnehmer nachgeschaltet ist. Je nach den Erfordernissen des in der Vorrichtung nach Fig. 1 erzeugten Rohstoffes oder Rohstoffersatzes kann aber auch noch eine Siebung 28 der extrudierten Abfallmischung der Zwischenlagerung vorausgeschaltet sein. Das Sieb kann ebenfalls als Siebrundbeschicker oder auch als Taumelsieb ausgeführt sein, um die gewünschte Konfraktion zu erzeugen.

Wie bereits in Fig. 1 schematisch angedeutet wurde, läßt sich das Verfahren für Abfälle unterschiedlicher Konsistenz einsetzen. So kann, falls pastöse Abfälle oder Schlämme einen großen Anteil der Ausgangsstoffe darstellen ein extrudiertes Gemenge entstehen, das eine zu hohe Feuchte aufweist. In diesen Fällen muß vor der Zwischenlagerung der erzeugten Rohrstoffe bzw. einer vorgeschalteten Siebung noch ein Trocknungsschritt erfolgen. Zum Einsatz gelangende Trockner können hierbei Gleichstrom- oder auch Gegenstromtrockner sein, wobei sich die Auswahl eines geeigneten Trockners nach der Konsistenz der erzeugten Abfallmischung und nach der abzuführenden Feuchtemenge richtet. Als Gegenstromtrockner kann beispielsweise ein Gegenstromdrehrohrofen 30 eingesetzt werden. Das getrocknete Gut wird anschließend wie oben beschrieben in das Zwischenlager gefördert oder aber vor der Zugabe zum Zwischenlager noch einmal gesiebt.

In einem Gegenstromdrehrohrofen kann bereits eine Vorbehandlung der erzeugten Rohstoff- oder Rohstoffersatzmischung stattfinden, indem diese bis ca. 1000°C vorgeglüht wird.

Bei der Verwendung eines Trockners entsteht Brüden, der erst nach einer nachgeschalteten Abluftreinigung an die Atmosphäre abgegeben werden kann. Da insbesondere bei der Verwendung staubförmiger Abfälle sich Staub im Brüden befindet, muß im Rahmen der Abluftreinigung erst eine Grobentstaubung stattfinden. Hierbei wird vorzugsweise ein Zyklon 32 eingesetzt, doch können auch andere in der Technik bekannte Vorrichtungen zum Einsatz gelangen. Die erwärmte Luft wird anschließend einem Wärmetauscher 34 zugeführt, um die darin enthaltene Restwärme zu nutzen, aber auch um die Abluft soweit abzukühlen, um in einem nachgeschalteten Adsorptionsschritt günstige Gleichgewichtsbedingungen erzeugen zu können. Es besteht auch die Möglichkeit, den Wärmetauscher als Kondensator auszulegen und das erzeugte Kondensat 42 abzuziehen, wie in Fig. 1 angedeutet ist.

Nach dem Wärmetausch wird das Abgas adsorptiv gereinigt, wobei sich die Auswahl des Adsorbens nach den Eigenschaften der bevorzugt abzutrennen Adsorptive richtet. Da sich auch nach einem als Kondensator ausgelegtem Wärmetauscher noch eine hohe Restfeuchte in der Abluft befindet, ist die Verwendung von Aktivkohlefiltern 36 bevorzugt, da hierbei die hydrophoben Bestandteile bevorzugt gebunden werden und diese nicht durch den hohen Feuchtegehalt in der Abluft beeinflußt werden.

Abschließend wird die Abluft als Reingas 40 aus einem Kamin 38 an die Atmosphäre abgegeben.

Das erfindungsgemäße Verfahren soll im folgenden kurz allgemein und anhand eines konkreten Beispiels erläutert werden.

Ausgehend von möglichen Zielstoffen mit vorgegebener mineralischer Zusammensetzung lassen sich mit dem Verfahren entweder ausgehend von bereits vorhandenen Abfällen, deren Mengengerüst und deren Zusammensetzung Mischungsverhältnisse zur Herstellung der Zielstoffe entwickeln oder aber auch Strategien entwickeln, welche Abfälle in welchen Mengen bei der Verwertungsanlage angenommen werden können. Hierzu müssen die Abfälle zunächst einer Analyse unterzogen werden, um die mechanischen Eigenschaften, wie beispielsweise die Partikelgröße, die mineralische Zusammensetzung sowie den Homogenisierungsgrad der Abfallfraktion zu bestimmen. Schließlich muß auch der Feuchtegehalt der Abfälle berücksichtigt werden. Neben der mineralischen Zusammensetzung sind selbstverständlich auch Stör- und Schadstoffe von Interesse, da diese im Rahmen einer Qualitätssicherung des hergestellten Zielstoffes berücksichtigt werden müssen.

Abhängig von dem Homogenisierungszustand der Abfallfraktion läßt sich auch entscheiden, ob die jeweiligen Analyseparameter durchgängig oder nur punktuell bestimmt werden müssen.

Aus der Kombination von Aufkommen, Aufbereitungstechnik und stofflicher wie chemischet Zusammensetzung wird eine Verwertungsmatrix erstellt, die Optionen für mögliche Rezepturen angibt. Hierzu wird eine rechnergestützte Optimierungsmathematik eingesetzt, die angibt, inwieweit ein Abfallstoff für den Einsatz als Teilkomponente für die Herstellung des gewünschten Zielstoffes geeignet ist. Des weiteren gibt die Optimierungsmathematik an, mit welchen Prozentanteilen der einzelne Abfallstoff für das Gemisch mit einer freigewählten Zusammensetzung verwendet werden soll. Wenn als konkretes Beispiel Rohmehlsubstitut für die Zementindustrie als Zielstoff hergestellt werden soll, so entspricht die Zusammensetzung des Rohmehlsubstituts der Angabe des Abnehmers, so daß eine identische mineralische Zusammensetzung mit nur Rohmehl der Portlandzementklinkerproduktion im Zementwerk erreichbar ist. Die mineralische Zusammensetzung von Rohmehl ist variabel, wird jedoch in der Regel der Zusammensetzung des zementwerkseigenen Rohmehls entsprechen soweit nicht mit der Zugabe von Rohmehl Korrekturmaßnahmen verbunden sind. Korrekturmaßnahmen können die zementwerkeigenen Rohstoffe verbessern oder auch Schadstoffkomponenten gezielt minimieren, so daß das Rohmehlsubstitut gezielt zur Verbesserung des zementwerkseigenen Rohrmehls eingesetzt werden kann.

Grundprinzip bei der Herstellung eines Zielstoffes ist es somit, daß möglichst viele Abfälle, die von unterschiedlichen Abfallerzeugern stammen, eingesetzt werden können.

Bei der Herstellung von Rohmehlersatz haben Laboruntersuchungen gezeigt, daß aufbereitete Abfallfraktionen vergleichbare oder sogar identische Eigenschaften aufweisen und erlangen können wie der gewünschte Zielstoff, Portlandzementklinker. Hierbei müssen die wesentlichen Mineralbestandteile und die beim Brennvorgang entstehenden Oxyde berücksichtigt werden. Für die eingesetzten Abfallfraktionen ist nur die mineralische Zusammensetzung von Belang, da festgestellt wurde, daß die organischen Anteile, die bis zu 15 % bei den Abfallfraktionen betragen können, normalerweise ohne nachteilige Bedeutung sind.

Im Rahmen einer Laboruntersuchung wurde nach dem Brennen von Rohmix das Portlandzementklinkerverhalten untersucht. Einzelne Probekörper wurden aufgemahlen und für die chemische Analyse (Elution bzw. Königswasseraufschluß) herangezogen. An entsprechenden Proben wurde mittels Röntgenuntersuchung die Phasenbeugung und damit die Einbindung der unterschiedlichen Mischungsanteile in die Klinkermatrix untersucht. Im Labor lies sich durch Mischen von mehreren Abfällen ein vollwertiger Rohmehlersatzstoff herstellen, der nach dem Brennen auf etwa 1460° C im Rahmen einer mineralogischen Untersuchung in allen untersuchten Eigenschaften einem konventionell hergestellten Portlandzementklinker entsprach.

Somit läßt sich durch eine innovative Kombination aus Aufbereitung verschiedener Abfallfraktionen ein Rohmehlersatzstoff von hoher Qualität herstellen.

### Beispiel 1

In der folgenden Tabelle 1 wird die aus einer vorgeschalteten chemischen Analyse gewonnene Zusammensetzung verschiedener Abfallproben A bis N aufgelistet. Die Angabe der chemischen Zusammensetzung kann in einer zweckmäßigen Weise gewählt werden, beispielsweise indem die in größeren Mengen vorhandenen Verbindungen oder Substanzen in Massenprozent angegeben werden und für die in geringeren Mengen vorhandenen Anteile eine andere geeignete Einheit gewählt wird. Diese Überlegungen stehen jedoch nur mit der mathematischen Berechnung in Zusammenhang, weil Matrizenrechnungen zu einem genaueren Ergebnis führen, wenn die einzelnen Elemente einer Matrix, die nicht den Wert Null besitzen, einen möglichst nicht zu geringen Wert besitzen.

Auch ist die in Tabelle 1 angegebene chemische Analyse der verschiedenen Proben nicht abschließend zu verstehen, d.h. es können durchaus auch andere Bestandteile mit aufgelistet werden, wenn in Bezug auf bestimmte gewünschte Zielstoffe andere mineralische Zusammensetzungen von Belang sind. Das in Tabelle 1 dargestellte Berechnungsbeispiel richtet sich auf die Erzeugung von Rohmehlsubstitut für die Portlandzementklinkerproduktion. Hierbei wird je nach Abnehmer ein Zielstoff gewünscht, der
18 - 20 Gew.-% SiO₂,
55 - 60 Gew.-% CaO,
4 - 10 Gew.-% Al₂O₃,
3 - 6 Gew.-% Fe₂O₃,
weniger als 4 Gew.-% K₂O + Na₂O
   und maximal 2,5 Gew.-% SO₃ besitzt, wobei
   die Zusammensetzung glühverlustfrei berechnet ist.

Tabelle 2 gibt die Vorgabe einer Zielzusammensetzung eines Zielstoffes, der aus einer Mischung der in Tabelle 1 aufgelisteten Komponenten A bis N gebildet werden soll. Hierbei sind für die Komponenten SiO₂, CaO, Al₂O₃, Fe₂O₃, MgO, Na₂O, K₂O sowie SO₃ jeweils eine minimale und maximale Konzentration in Gew.-% angegeben. Durch die geeignete Eingabe der Fensterbreite kann eine Wertung der besonders streng einzuhaltenden Kriterien und der weicheren Zielkriterien erfolgen und, nicht in Tabelle 2 dargestellt,

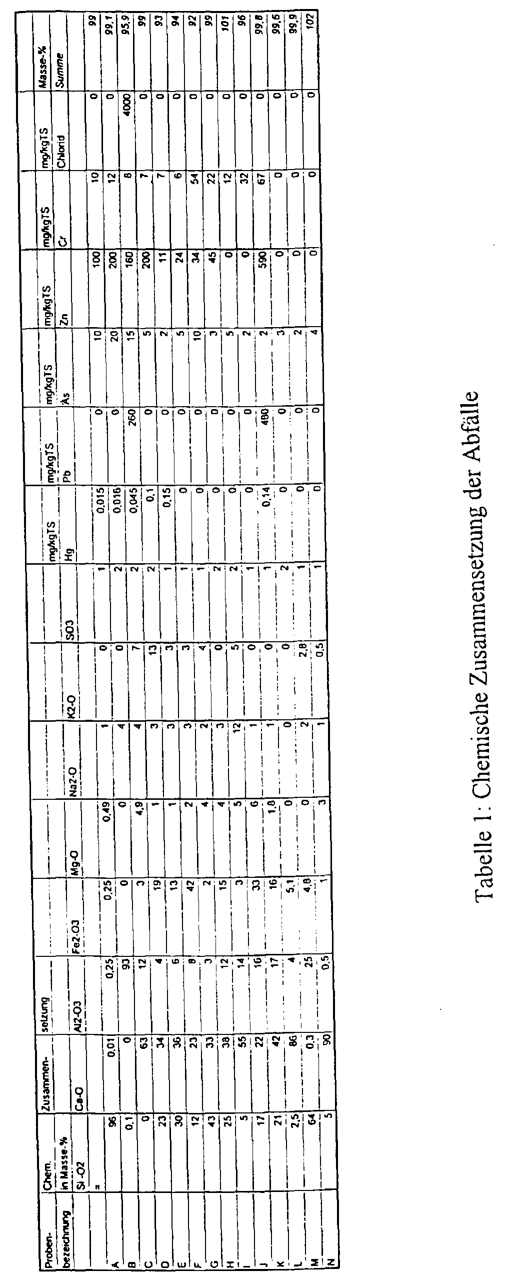

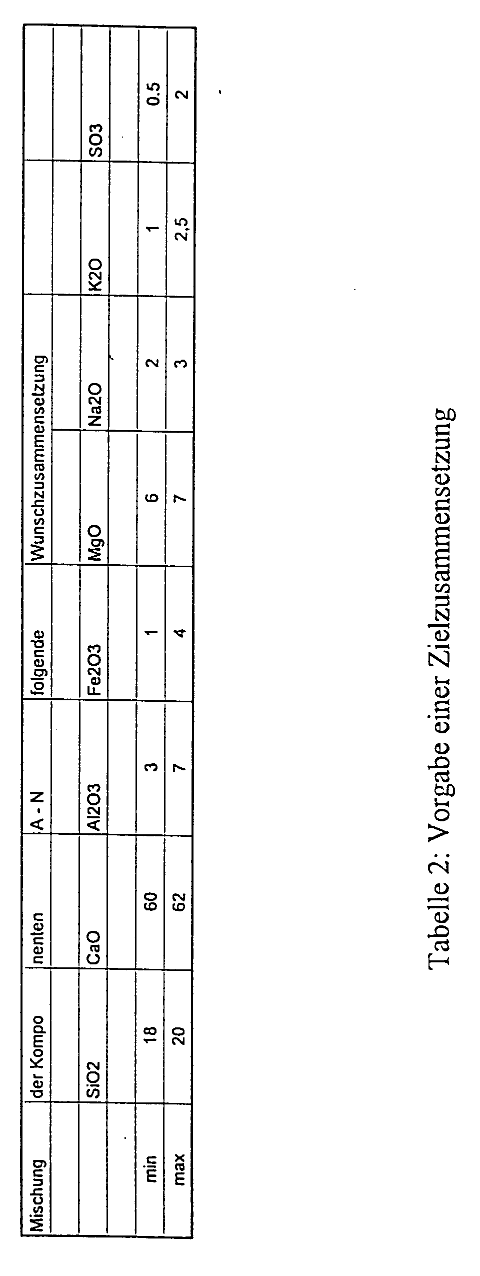

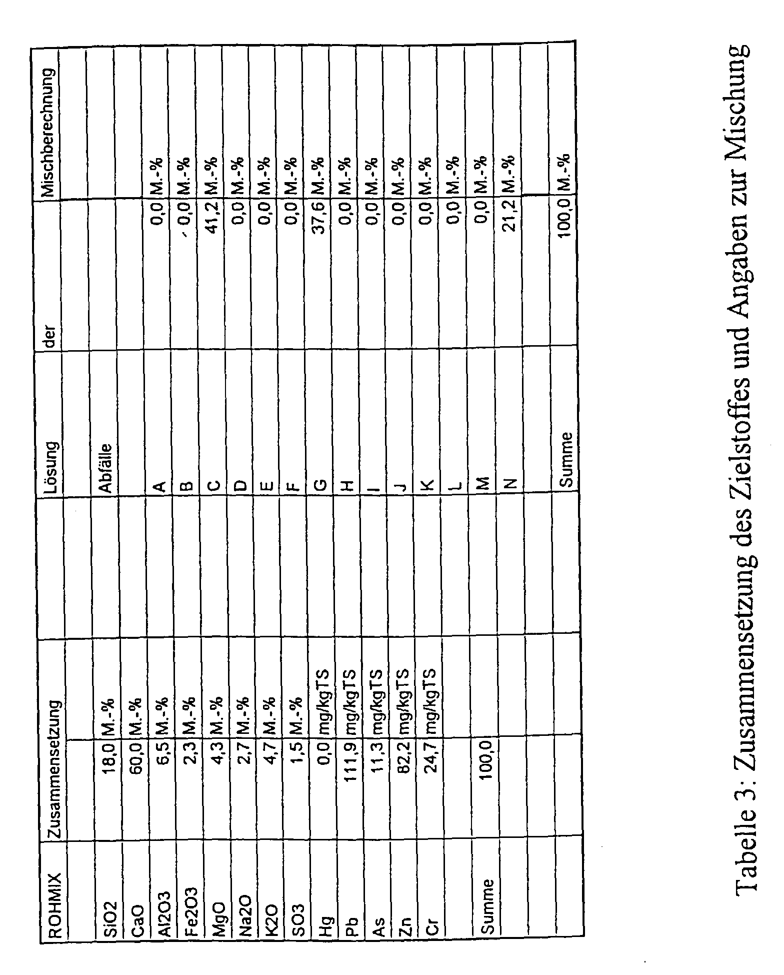

besteht im Rahmen einer Auswertemathematik auch die Möglichkeit, einen möglichst geringen Anteil bestimmter Stoffe pauschal als Vorgabe einzusetzen.

Tabelle 3 gibt die hieraus berechnete Mischung der Abfälle A bis N an, wobei die Zusammensetzung des entstehenden Produkts und die Mischberechnung, d.h. die Angabe der verwertbaren Abfälle und deren Mischverhältnis in Massenprozent angegeben sind. Ergibt eine derartige Berechnung im Bereich der nicht als Zielzusammensetzung spezifizierten Schadstoffkomponenten einen zu hohen Anteil, so kann die Berechnung jeweils unter Vorgabe geänderter Zielzusammensetzungen wiederholt werden, um iterativ bestimmte Schadstoffkomponenten, die sich vor allen Dingen in einem der Abfälle befinden, unter ein vorgegebenes Maß verringern zu können. In gleicher Weise kann auch eine Kostenminimierung mit in das Berechnungsprogramm eingebunden werden, indem die für die Abnahme der einzelnen Abfälle an die Entsorgungsunternehmen gerichteten Kosten mitberücksichtigt werden. Ebenso ist es möglich, die anfallenden Abfallmengen durch geeignete Gewichtungsfaktoren zu werten, um diese gezielt zu verwenden, so daß in größeren Mengen anfallende Abfälle bevorzugt verwertet werden.

### Beispiel 2

In den Tabellen 4 und 5 ist zur besseren Verdeutlichung das Berechnungsergebnis basierend auf einer geänderten Vorgabe einer Zielzusammensetzung aufgelistet. Das hierbei gewünschte Produkt weist einen deutlich höheren Siliziumoxid und einen geringeren Kalziumoxidgehalt auf, als dies bei der Zielvorgabe gemäß Tabelle 2 der Fall war. Dies führt zu einem Berechnungsergebnis, bei dem sich der gewünschte Zielstoff nur aus einer Mischung der zwei verschiedenen Abfallfraktionen G und J herstellen läßt, was bei einem hohen Aufkommen dieser beiden Abfallfraktionen G und J gewünscht angestrebt werden kann.

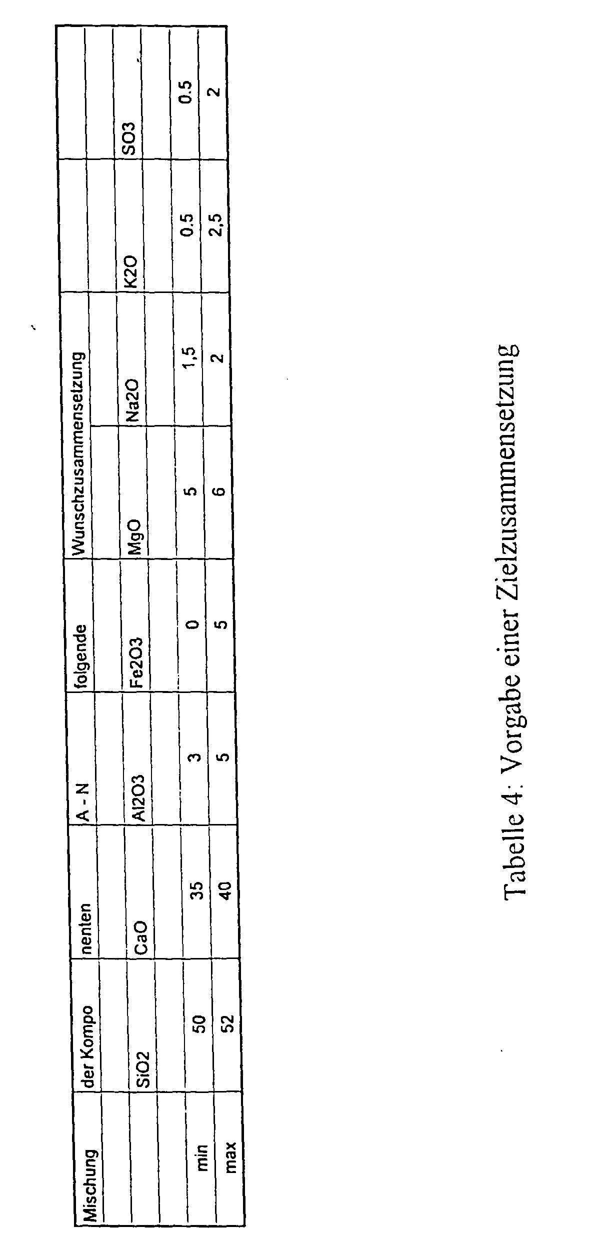

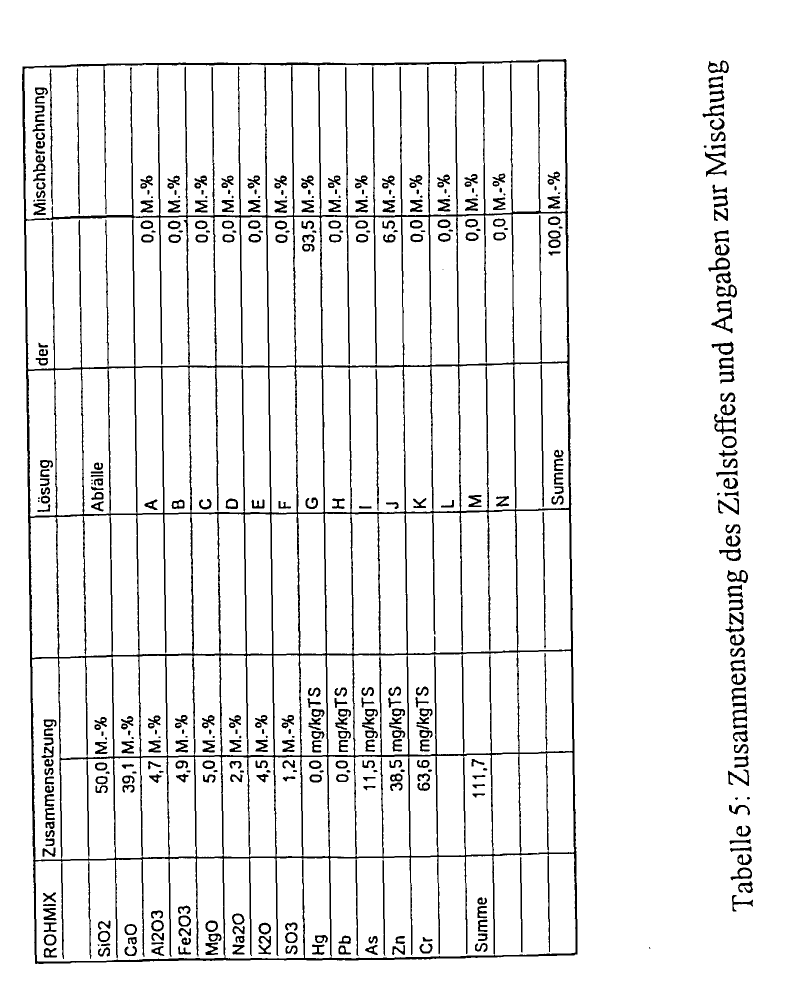

## Patentansprüche

1. Verfahren zur Verwertung von mineralischen Abfällen zur Herstellung eines Zielstoffes mit vorgegebener mineralischer Zusammensetzung, umfassend die Schritte:
- Vorgabe der mineralischen Zusammensetzung des Zielstoffes;
- Analyse einer Vielzahl von Abfallfraktionen;
- Ermittlung der einzusetzenden Abfallfraktionen und des Mischungsverhältnisses der einzusetzenden Abfallfraktionen; sowie
- Mischen der Abfallfraktionen entsprechend dem ermittelten Mischungsverhältnis.

2. Verfahren nach Anspruch 1,
dadurch **gekennzeichnet**, daß
der Zielstoff ein Rohmehlsubstitut für das Rohmehl der Zementproduktion ist.

3. Verfahren nach Anspruch 1 oder 2,
dadurch **gekennzeichnet**, daß
zu den Abfallfraktionen ein oder mehrere Rohstoffe zugemischt werden.

4. Verfahren nach einem der vorhergehenden Ansprüche,
dadurch **gekennzeichnet**, daß
die Ermittlung der Abfallfraktionen, des Mischungsverhältnisses und der eventuell zuzugebenden Rohstoffe rechnergestützt erfolgt.

5. Verfahren nach Anspruch 4,
dadurch **gekennzeichnet**, daß
bei der rechnergestützten Ermittlung Gewichtungsfaktoren für die einzelnen Abfallfraktionen eingegeben werden können, um die Menge an zu verarbeitenden Abfällen zu berücksichtigen.

6. Verfahren nach Anspruch 2 sowie einem der Ansprüche 3 bis 5, sofern diese von Anspruch 2 abhängig sind, weiter umfassend das Brennen des Rohmehlsubstituts.

7. Verfahren nach Anspruch 6,
dadurch **gekennzeichnet**, daß
die Zusammensetzung des Rohmehlsubstituts geeignet eingestellt wird, um das aus dem Rohmehlsubstitut und zementwerkeigenen Rohmehl resultierende Rohmehl des Zementwerks gezielt zu beeinflussen.

8. Verfahren nach Anspruch 7,
dadurch **gekennzeichnet**, daß
das Schadstoffpotential des Rohmehls des Zementwerks minimiert wird.

9. Verfahren nach einem der Ansprüche 6 bis 7,
dadurch **gekennzeichnet**, daß
der Feuchtigkeitsgehalt des Rohmehlsubstituts durch Trocknen gezielt eingestellt wird.

10. Vorrichtung zur verwertung von mineralischen Abfällen, umfassend:
- eine Berechnungseinheit zur Ermittlung der Mischungsmengen und Mischungsverhältnisse mineralischer Abfallfraktionen;
- eine Dosiereinrichtung für die mineralischen Abfallfraktionen; und
- eine Mischeinrichtung zum Erzeugen einer Abfallmischung.

11. Vorrichtung nach Anspruch 10, weiter umfassend mindestens eine Zerkleinerungseinrichtung für Abfälle oder die Abfallmischung.

12. Vorrichtung nach Anspruch 11,
dadurch **gekennzeichnet**, daß
die Zerkleinerungseinrichtung ein Siebrundbeschicker ist.

13. Vorrichtung nach einem der Ansprüche 10 bis 12,
dadurch **gekennzeichnet**, daß
die Mischeinrichtung ein Extruder ist.

14. Vorrichtung nach einem der Ansprüche 10 bis 13, weiter umfassend einen Trockner zur Entfeuchtung der Abfallmischung.

15. Vorrichtung nach einem der Ansprüche 10 bis 13, weiter umfassend einen Gegenstromdrehrohrofen.

16. Vorrichtung nach einem der Ansprüche 10 bis 14, weiter umfassend Analyseeinrichtungen für die mineralischen Abfallfraktionen.

17. Vorrichtung nach einem der Ansprüche 10 bis 15, weiter umfassend Vorratsbehälter und Dosiereinrichtungen für Rohstoffe.
